# EUROPÄISCHE PATENTANMELDUNG

(11) **EP 1 691 113 A2**
(43) Veröffentlichungstag der Anmeldung: **16.08.2006**
(21) Anmeldenummer: 06002531.9
(22) Anmeldetag: 08.02.2006
(51) Int. Cl.: F16K 1/08, F16K 11/04, F16K 37/00

(54) **Verteilerventil**

(30) Priorität: 12.02.2005 DE 102005006478
(71) Anmelder: Hans Straub Gebäudesystemtechnik GmbH, 73337 Bad Überkingen (DE)
(72) Erfinder: Peter Langbein, 53703 Menden (DE)
(74) Vertreter: Fürst, Siegfried

(57) **Zusammenfassung**

Um ein Verteilerventil mit einer Durchflussmesseinrichtung insbesondere für Warmwasser-Heizungsanlagen zum Einsatz in einem Hauptleitungsrohr zu schaffen, mit dem eine genauere Messung der Durchflussanzeige und eine verbesserte und feinfühligere Ventilverstellung durch die Trennung der Ventilschließeinrichtung von der Durchflussmesseinrichtung erhalten wird, wird vorgeschlagen, dass ein Verteilerventil (1) mit einer an dem Verteilerventil (1) angeordneten Durchflussmesseinrichtung (2) einen längs einer Verschiebeachse (11) von der Durchflussmesseinrichtung (2) bis in ein Anschlussrohr (6) durchgängig ausgebildeten Stößel (12) aufweist, an dessen freiem, in das Anschlussrohr (6) hineinragenden Ende ein Verschlussteil (10) angeordnet ist, mittels dem durch Drehung an einem Stellelement (15) eine im Anschlussrohr (6) befindliche Austrittsöffnung geöffnet oder verschlossen wird, wobei auf dem Stößel (12) ein Messelement der Durchflussmesseinrichtung (2) so geführt ist, dass das Messelement längs der Verschiebeachse (11) auf dem Stößel (12) in eine Endstellung bis zum Verschlussteil (10) auslenkbar ist, und wobei die einzelnen Stellungen des Messelements mittels eines Anzeigeteils (32) an einer Skala der Durchflussmesseinrichtung (2) ablesbar sind.

## Beschreibung

Die Erfindung betrifft ein Verteilerventil mit einer Durchflussmesseinrichtung insbesondere für Warmwasser-Heizungsanlagen zum Einsatz in einem Hauptleitungsrohr, wobei im Verteilerventil ein verschließbarer Ventilsitz vorgesehen ist und eine Durchflussmesseinrichtung mit einer Anzeige, die sich längs einer Achse in ein Anschlussrohr des Verteilerventils erstreckt, bestehend aus einem durch die Strömung im Anschlussrohr auslenkbaren Anströmglied, dessen jeweilige Stellung von außen an der Durchflussmesseinrichtung ablesbar ist.

Bekannt sind derartige Verteilerventile für Warmwasserheizungsanlagen insbesondere zum Einsatz in einer Hauptleitung und mehreren davon abzweigenden Anschlussleitungen, um einen Abgleich der einzelnen Leitungen zueinander vorzunehmen, zur Verhinderung von Leistungsverlusten und zum hydraulischen Ausgleich in der Warmwasserheizungsanlage. Es hat sich bei den Verteilerventilen als vorteilhaft erwiesen, das Verteilerventil mit einer Durchflussmesseinrichtung zu kombinieren, um einerseits den Montageaufwand und den Platzbedarf zu verringern und anderseits eine einfache Einstellung und Ablesung der durchfließenden Wassermenge zu erhalten. Aus der DE 31 15 572 A1 ist der allgemeine Aufbau eines Durchflussreguliergerätes für Warmwasserheizungsanlagen bekannt, das ein in einem Strömungskanal liegendes Fenster, einen im Strömungskanal verschiebbaren Kolben, der von einer Strömungsflüssigkeit beaufschlagbar und entlang des Fensters bewegbar ist, eine im Strömungskanal befindliche Schraubenfeder, die einerseits am Kolben und anderseits an dem Gerätegehäuse abgestützt ist, und weiterhin eine Skala sowie eine Indexmarkierung an dem gehäusefesten Teilen und am verschiebbaren Kolben zum Anzeigen der Kolbenstellung entlang der Skala aufweist. In der DE 35 09 718 C2 wird ein Verteilerventil mit Durchflussmesser beschrieben, bei dem der Durchflussmesser in das Verteilerventil integriert ist. Es ist kein gesondertes Gehäuse für das Anströmglied, die Feder und die Stellungsanzeigestange erforderlich, da diese Teile vom Querrohr und der Spindelbohrung aufgenommen werden, wobei das Anströmglied in der Endstellung in der Nähe des Verschlusskörpers liegt und die Stellungsanzeigestange mit der den Durchflussquerschnitt bestimmenden Verstellspindel aus dem Gehäuse herausgeführt ist und beide räumlich unmittelbar miteinander vereinigt sind. Ein großes Problem bei den Verteilerventilen mit einer Durchflussmesseinrichtung besteht in der turbulenten Anströmung des Anströmteiles der Durchflussmesseinrichtung verbunden mit einer ungenauen Durchflussanzeige und der vielfach auftretenden Verschmutzung des Messfühlers.

Ausgehend von diesem Stand der Technik besteht die Aufgabe der Erfindung darin, ein Verteilerventil mit einer Durchflussmesseinrichtung so zu verbessern, dass die genannten Nachteile weiter eingeschränkt werden und gleichzeitig eine genauere Messung der Durchflussanzeige und eine verbesserte und feinfühligere Ventilverstellung erhalten wird.

Gelöst wird diese Aufgabe dadurch, dass ein Verteilerventil mit einer an dem Verteilerventil angeordneten Durchflussmesseinrichtung einen längs einer Verschiebeachse von der Durchflussmesseinrichtung bis in ein Anschlussrohr durchgängig ausgebildeten Stößel aufweist, an dessen freiem, in das Anschlussrohr hineinragenden Ende ein Verschlussteil angeordnet ist, mittels dem durch Drehung an einem Stellelement eine im Anschlussrohr befindliche Austrittsöffnung geöffnet oder verschlossen wird, wobei auf dem Stößel ein Messelement der Durchflussmesseinrichtung so geführt ist, dass das Messelement längs der Verschiebeachse auf dem Stößel in eine Endstellung bis zum Verschlussteil auslenkbar ist, und wobei die einzelnen Stellungen des Messelements mittels eines Anzeigeteils an einer Skala der Durchflussmesseinrichtung ablesbar sind.

Vorteilhaft ist, dass das Verschlussteil im Anschlussrohr außerhalb des Hauptrohres angeordnet ist und in Verbindung mit einer im Anschlussrohr angeordneten Kegelbohrung die im Anschlussrohr vorgesehene Austrittsöffnung öffnet oder verschließt, so dass dadurch eine Trennung der Ventilschließeinrichtung von der Durchflussmesseinrichtung erhalten wird.

Eine vorteilhafte Weiterbildung wird darin gesehen, dass das Verschlussteil insbesondere kegelförmig mit einem mittig vorgesehen Dichtring ausgebildet ist, wobei das Verschlussteil bei Drehung des Stellelementes über den Stößel längs der Verschiebeachse in einer Bohrung des Anschlussrohres so weit bewegt wird, bis es mit seiner Mantelfläche an der im Anschlussrohr vorgesehenen Kegelbohrung diese verschließend anliegt, so dass eine feinfühligere Verstellung des Verteilerventils erhalten wird.

Bevorzugt ist vorgesehen, dass das Verschlussteil an dem unteren freien Ende des als Stange ausgebildeten Stößels befestigt ist, wobei das obere Ende des Stößels an einer Abdeckkappe der Durchflussmesseinrichtung angeordnet ist. Weiterhin ist vorgesehen, dass das obere und untere Ende des Stößels ein Gewinde aufweisen, zum Befestigen des Stößels an der Abdeckkappe des Durchflussmessers und des Verschlussteils am Stößel.

Eine vorteilhafte Ausführungsform wird darin gesehen, dass das Messelement der Durchflussmesseinrichtung als eine auf dem Stößel geführte Hülse ausgebildet ist, an deren oberem Ende ein Anzeigeteil angeordnet ist und an deren unterem Ende ein Anströmteil vorgesehen ist, und wobei eine schraubenförmig um die Hülse sich erstreckende Druckfeder das Anströmteil in eine Ausgangslage drückt und das Anströmteil durch die Strömung im Anschlussrohr ausgelenkt wird, wobei die Durchflussmenge mittels des Anzeigeteils an der auf einer Mantelfläche der Durchflussmesseinrichtung angeordneten Skala ablesbar ist. Das Anströmteil der Durchflussmesseinrichtung ist dabei in vorteilhafter Weise oberhalb des Verschlussteiles angeordnet, so dass durch die Trennung der Mess- und Ventilschließeinrichtung eine genauere Messung des Durchflusses durch Verringerung der Verwirbelungen am Anströmteil und eine Verminderung der Verschmutzung des Messelementes und damit verbunden eine längere Lebensdauer des Verteilerventils erreicht wird.

Bevorzugt ist vorgesehen, dass die spiralförmig ausgebildete Druckfeder sich gleichzeitig an dem Anzeigeteil und einem im Hauptrohr vorgesehenen Befestigungselement abstützt, so dass dadurch neben einer Verbesserung für die Federkraft eine genaue Einstellung auf den Messwert der Durchflussmenge von Warmwasser erhalten wird.

Eine bevorzugte sowohl fertigungstechnisch günstige, als auch materialsparende Ausgestaltung wird darin gesehen, dass das Anzeigeteil und das Anströmteil als runde Scheiben aus Kunststoff ausgebildet sind, ebenso wie die aus Kunststoff ausgebildete Hülse.

Wesentlich an dem neuen Verteilerventil mit der darauf angeordneten Durchflussmesseinrichtung ist die Trennung der Ventilschließeinrichtung von der Durchflussmesseinrichtung, so dass das Verschlussteil jetzt im Anschlussrohr angeordnet ist und damit eine turbulente Anströmung des Anströmteiles der Durchflussmesseinrichtung beim Schließen des Ventils vermieden wird, so dass neben einer genaueren Durchflussmessung durch den Kegelsitz im Anschlussrohr eine feinfühligere Verstellung des Verteilerventils erhalten wird.

Die Erfindung wird nachfolgend anhand eines schematisch in Zeichnungen dargestellten Ausführungsbeispieles näher erläutert.
Es zeigen:
- Figur 1: eine isometrische Darstellung des erfindungsgemäßen Ventilverteilers im Teilschnitt;
- Figur 2: eine Darstellung des Ventilverteilers im Halbschnitt;
- Figur 3: eine Einzelheit zur Abdichtung des Bewegungsgewindes;
- Figur 4: das Verschlussteil im Schnitt.

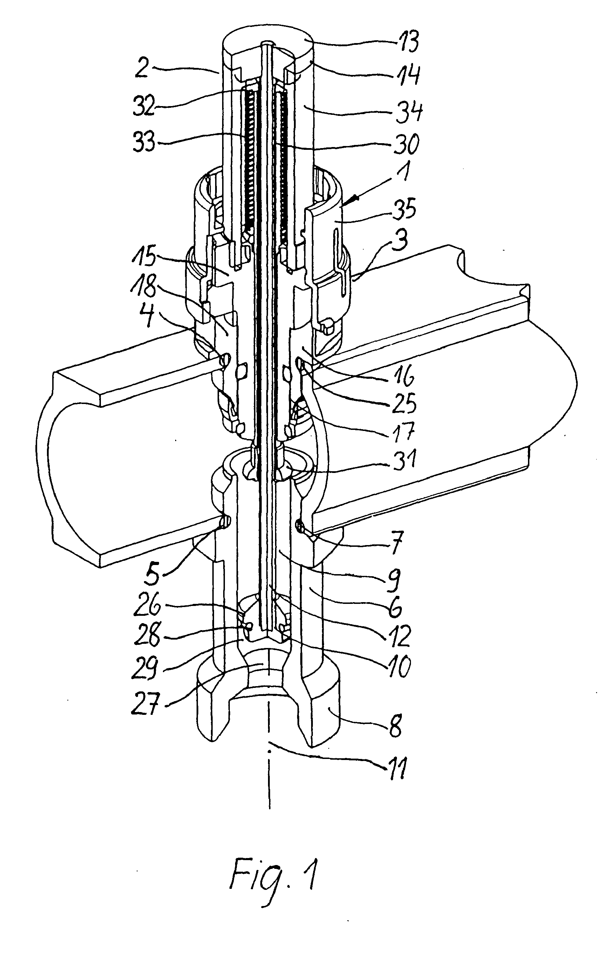

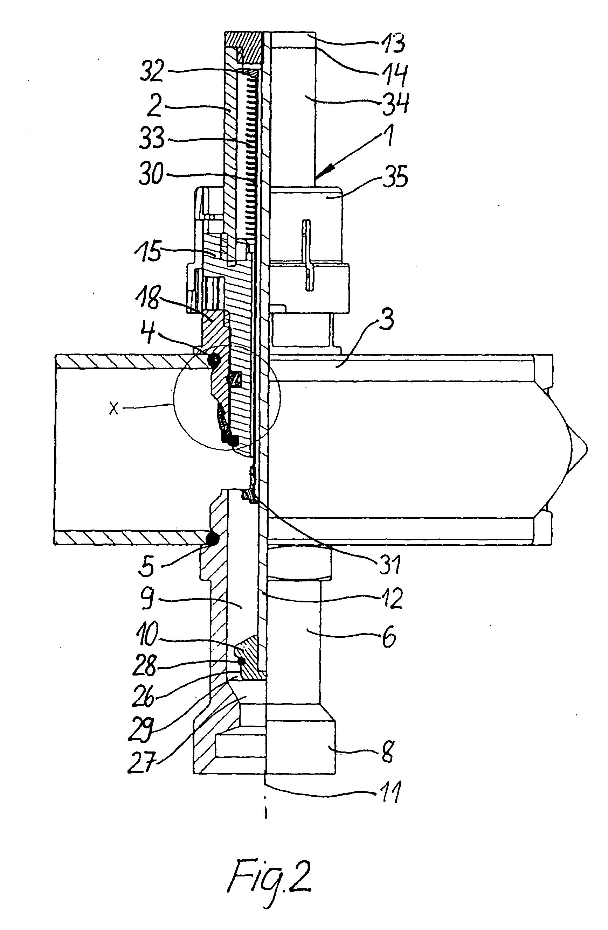

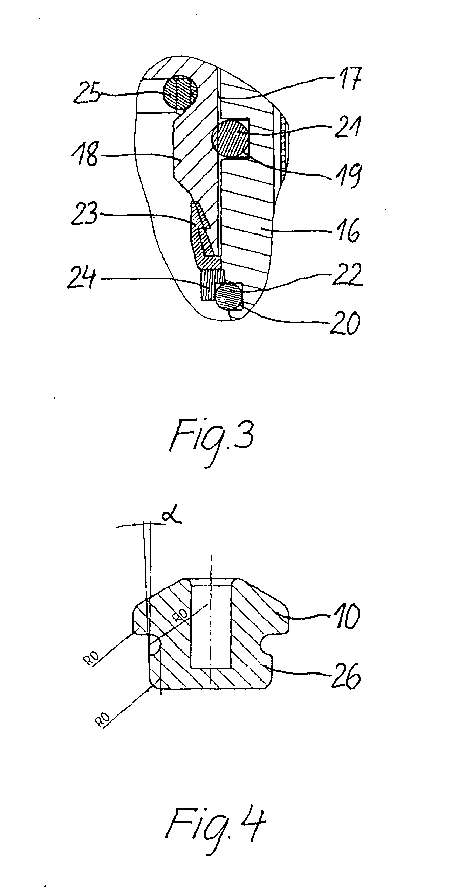

Figur 1 und 2 zeigen ein Verteilerventil 1 mit einer Durchflussmesseinrichtung 2, das im Vorlauf eines Warmwasser-Heizungssystems in ein Hauptleitungsrohr 3 eingesetzt wird, welches Öffnungen 4,5 aufweist, wobei in der oberen Öffnung 4 das Verteilerventil 1 mit der Durchflussmesseinrichtung 2 abdichtend gehalten ist und in der anderen gegenüberliegenden unteren Öffnung 5 ein Anschluss für ein radial in das Hauptrohr ragendes, vorzugsweise durch eine Schraubverbindung befestigtes Anschlussrohr 6 vorgesehen ist. Die Schraubverbindung wird durch einen O-Ring 7 abgedichtet. Am dem dem Hautrohr 3 abgewandten Ende des Anschlussrohres 6 befindet ein Gewindeansatz 8 zur Befestigung eines nicht dargestellten weiterführenden Rohres. In einer im Anschlussrohr 6 befindlichen Bohrung 9 ist ein Verschlussteil 10 angeordnet, das sich längs einer Verschiebeachse 11 in der Bohrung 9 des Anschlussrohres 6 bewegen kann. Das Verschlussteil 10 ist dazu an einem als Stange ausgebildeten Stößel 12 befestigt. Das dem Verschlussteil 10 abgewandte obere Ende des Stößels 12 ist mit einer Abdeckkappe 13 der Durchflussmesseinrichtung 2 verbunden, die wiederum an einer Stirnseite 14 der rohrförmig ausgebildeten Durchflussmesseinrichtung 2 angeordnet ist.
Die rohrförmig ausgebildete Durchflussmesseinrichtung 2 ist an einem Stellelement 15 befestigt, so dass bei Drehung des Stellelementes 15 um die Verschiebeachse 11 das Verschlussteil 10 längs der Verschiebeachsechse 11 in der Bohrung 9 des Anschlussrohres 6 bewegt wird. Dazu ist am Stellelement 15 ein Gewindezapfen 16 angeordnet, der in eine Gewindebohrung 17 eines Befestigungselementes 18, das im Hauptrohr 3 gegenüber dem Anschlussrohr 6 angeordnet ist, eingeschraubt ist. Zur Abdichtung des Bewegungsgewindes sind (siehe Figur 3) in den Gewindezapfen 16 zwei Nuten 19, 20 eingebracht, in die zwei O-Ringe 21, 22 eingelegt sind. Außerdem sind auf dem Befestigungselement 18 und auf dem Gewindezapfen 16 zwei Dichtringe 23, 24 angeordnet. Zur Abdichtung des Befestigungselementes 18 in dem Hauptrohr 3 dient ein O-Ring 25.
Wird das Stellelement 15 im Uhrzeigersinn gedreht, bewegt sich das Verschlussteil 10 längs der Verschiebeachse 11 in der Bohrung 9 des Anschlussrohres 6 bis es mit seiner Mantelfläche 26 an einer im Anschlussrohr 6 angeordneten Kegelbohrung 27 anliegt. In dieser Stellung ist das Verteilerventil 1 geschlossen und es kann kein Wasser vom Hauptrohr 3 in das Anschlussrohr 6 strömen. Soll durch das Anschlussrohr 6 Wasser fließen, muss durch Drehen des Stellelementes 15 entgegen dem Uhrzeigersinn das Verschlussteil 10 angehoben werden. Durch unterschiedliches Anheben des Verschlussteiles 10 kann durch Veränderung der Größe eines Spaltes 29 der Volumenstrom variiert werden. Die Gestaltung der Mantelfläche 26 des Verschlussteiles 10 entsprechend Figur 4 ermöglicht eine feinfühlige Einstellung.
Die insbesondere rohrförmig ausgebildete Durchflussmesseinrichtung 2, die in dem Verteilerventil 1 angeordnet ist, besteht aus einer als Messelement ausgebildeten und auf dem Stößel 12 geführten Hülse 30, die auf dem Stößel 12 entlang der Verschiebeachse 11 bewegt werden kann. Am oberen Ende der Hülse 30 ist ein Anzeigeteil 32 angeordnet, zur Anzeige des Messwertes der Durchflussmenge und am unteren Ende der Hülse 30 ist ein Anströmteil 31 angeordnet. An dem Anzeigeteil 32 stützt sich eine schraubenförmig um die Hülse 30 sich erstreckende Druckfeder 33 ab. Gleichzeitig stützt sich die Druckfeder 33 an dem Befestigungselement 18 ab, so dass das Anströmteil 31 in eine Endstellung gedrückt und durch die Strömung im Anschlussrohr 6 ausgelenkt wird, zur Anzeige an einer auf einer Mantelfläche 35 der Durchflussmesseinrichtung 1 angeordneten Messskala. Wird durch Drehen des Stellelementes 15 der Spalt 29 geöffnet, strömt das Wasser in die Bohrung 9 des Anschlussrohres 6 und zieht das Anströmteil 31 gegen die Druckfeder 33 nach unten. Die sich einstellende Lage des Anströmteiles 31 ist von der Größe des Volumenstromes abhängig. Gleichzeitig mit dem Anströmteil 31 bewegt sich das Anzeigeteil 32 nach unten. Die Lage des Anzeigeteiles 32 in der Durchflussmesseinrichtung 2 kann, da sie durchsichtig ausgebildet ist, auf einer an der Mantelfläche 35 angeordneten, nicht näher dargestellten Messskala abgelesen werden. Das Stellelement 15 des Verteilerventils 1 wird solange verstellt, bis der für das Anschlussrohr 6 geforderte Volumenstrom erreicht ist. Um ein unbeabsichtigtes Verstellen des Stellelementes 15 zu verhindern, wird eine Abschlusskappe 35 auf das Stellelement 15 aufgesteckt.
Eine fertigungstechnisch günstige, als auch materialsparende Ausgestaltung besteht darin, dass das Anzeigeteil 32 und das Anströmteil 31 als runde Scheiben aus Kunststoff ausgebildet sind, ebenso wie die Hülse 30.

### Bezugszeichenliste

- 1: Verteilerventil
- 2: Durchflussmesseinrichtung
- 3: Hauptrohr
- 4: obere Öffnung im Hauptrohr
- 5: untere Öffnung im Hauptrohr
- 6: Anschlussrohr
- 7: O-Ring
- 8: Gewindeansatz
- 9: Bohrung
- 10: Verschlussteil
- 11: Verschiebeachse des Anschlussrohres
- 12: Stößel
- 13: Abdeckkappe der Durchflussmesseinrichtung
- 14: Stirnseite der Durchflussmesseinrichtung
- 15: Stellelement
- 16: Gewindezapfen
- 17: Gewindebohrung
- 18: Befestigungselement
- 19: Nut
- 20: Nut
- 21: O-Ring
- 22: O-Ring
- 23: Dichtring
- 24: Dichtring
- 25: O-Ring
- 26: Mantelfläche des Verschlussteiles
- 27: Kegelbohrung
- 28: O-Ring
- 29: Spalt
- 30: Hülse
- 31: Anströmteil
- 32: Anzeigeteil
- 33: Druckfeder
- 34: Mantelfläche der Durchflussmesseinrichtung
- 35: Arretierkappe

## Patentansprüche

1. Verteilerventil mit einer Durchflussmesseinrichtung insbesondere für Warmwasser-Heizungsanlagen zum Einsatz in einem Hauptleitungsrohr, wobei im Verteilerventil ein verschließbarer Ventilsitz vorgesehen ist, und eine Durchflussmesseinrichtung mit einer Anzeige, die sich längs einer Achse in ein Anschlussrohr des Verteilerventils erstreckt, bestehend aus einem durch die Strömung im Anschlussrohr auslenkbaren Anströmglied, dessen jeweilige Stellung von außen an der Durchflussmesseinrichtung ablesbar ist,
**dadurch gekennzeichnet,**
**dass** ein Verteilerventil (1) mit einer an dem Verteilerventil (1) angeordneten Durchflussmesseinrichtung (2) einen längs einer Verschiebeachse (11) von der Durchflussmesseinrichtung (2) bis in ein Anschlussrohr (6) durchgängig ausgebildeten Stößel (12) aufweist, an dessen freiem, in das Anschlussrohr (6) hineinragenden Ende ein Verschlussteil (10) angeordnet ist, mittels dem durch Drehung an einem Stellelement (15) eine im Anschlussrohr (6) befindliche Austrittsöffnung geöffnet oder verschlossen wird, wobei auf dem Stößel (12) ein Messelement der Durchflussmesseinrichtung (2) so geführt ist, dass das Messelement längs der Verschiebeachse (11) auf dem Stößel (12) in eine Endstellung bis zum Verschlussteil (10) auslenkbar ist, und wobei die einzelnen Stellungen des Messelements mittels eines Anzeigeteils an einer Skala der Durchflussmesseinrichtung (2) ablesbar sind.

2. Verteilerventil nach Anspruch 1,
**dadurch gekennzeichnet,**
**dass** das Verschlussteil (10) im Anschlussrohr (6) außerhalb eines Hauptrohres (3) angeordnet ist und in Verbindung mit einer im Anschlussrohr (6) angeordneten Kegelbohrung (9) die vorgesehene Austrittsöffnung öffnet oder verschließt.

3. Verteilerventil nach Anspruch 1 und 2,
**dadurch gekennzeichnet,**
**dass** das Verschlussteil (10) insbesondere kegelförmig mit einem mittig vorgesehen Dichtring ausgebildet ist, wobei das Verschlussteil (10) bei Drehung des Stellelementes (15) über den Stößel (12) längs der Verschiebeachse (11) in einer Bohrung (9) des Anschlussrohres (6) so weit bewegt wird, bis es mit seiner Mantelfläche an der im Anschlussrohr (6) vorgesehenen Kegelbohrung (9) diese verschließend anliegt.

4. Verteilerventil nach einem der Ansprüche 1 bis 3,
**dadurch gekennzeichnet,**
**dass** das Verschlussteil (10) an dem unteren freien Ende des als Stange ausgebildeten Stößels (12) befestigt ist, wobei das obere Ende des Stößels (12) an einer Abdeckkappe (13) der Durchflussmesseinrichtung (2) angeordnet ist.

5. Verteilerventil nach einem der Ansprüche 1 bis 4,
**dadurch gekennzeichnet,**
**dass** das obere und untere Ende des Stößels (12) Gewinde aufweisen, zum Befestigen des Stößels (12) an der Abdeckkappe (13) des Durchflussmessers (2) und des Verschlussteils (10) am Stößel (12).

6. Verteilerventil nach einem der Ansprüche 1 bis 5,
**dadurch gekennzeichnet,**
**dass** das Messelement der Durchflussmesseinrichtung (2) als eine auf dem Stößel (12) geführte Hülse (30) ausgebildet ist, an deren oberem Ende ein Anzeigeteil (32) angeordnet ist und an deren unterem Ende ein Anströmteil (31) vorgesehen ist, und wobei eine schraubenförmig um die Hülse (30) sich erstreckende Druckfeder (33) das Anströmteil (31) in eine Ausgangslage drückt und das Anströmteil (31) durch die Strömung im Anschlussrohr (6) ausgelenkt wird, wobei die Durchflussmenge mittels des Anzeigeteils (32) an der auf einer Mantelfläche (34) der Durchflussmesseinrichtung (1) angeordneten Skala ablesbar ist.

7. Verteilerventil nach einem der Ansprüche 1 bis 6,
**dadurch gekennzeichnet,**
**dass** das Anströmteil (31) der Durchflussmesseinrichtung (2) oberhalb des Verschlussteils (10) angeordnet ist.

8. Verteilerventil nach einem der Ansprüche 1 bis 7,
**dadurch gekennzeichnet,**
**dass** die spiralförmig ausgebildete Druckfeder (33) sich gleichzeitig an dem Anzeigeteil (32) und einem im Hauptrohr (3) vorgesehenen Befestigungselement (18) abstützt.

9. Verteilerventil nach einem der Ansprüche 1 bis 8,
**dadurch gekennzeichnet,**
**dass** das Anzeigeteil (32) und das Anströmteil (31) als runde Scheiben ausgebildet sind.

10. Verteilerventil nach einem der Ansprüche 1 bis 9,
**dadurch gekennzeichnet,**
**dass** die Hülse (30) insbesondere aus Kunststoff ausgebildet ist.

11. Verteilerventil nach einem der Ansprüche 1 bis 10,
**dadurch gekennzeichnet,**
**dass** das Anzeigeteil (32) und das Anströmteil (31) insbesondere aus Kunststoff ausgebildet sind.
